# EUROPEAN PATENT SPECIFICATION

(11) **EP 3 518 315 B1**
(45) Date of publication and mention of the grant of the patent: **26.06.2024**
(21) Application number: 17852400.5
(22) Date of filing: 21.09.2017
(51) Int. Cl.: H01M 10/04, H01M 10/0525, H01M 10/0587

(54) **WOUND CELL**
WICKELZELLE
CELLULE ENROULÉE

(30) Priority: 22.09.2016 CN 201621070386 U
(43) Date of publication of application: 31.07.2019
(73) Proprietor: Ningde Amperex Technology Limited, Ningde, Fujian 352100 (CN)
(72) Inventor: XIAO, Liangzhen, Ningde Fujian 352100 (CN); ZENG, Qiao, Ningde Fujian 352100 (CN); WANG, Kefei, Ningde Fujian 352100 (CN)
(74) Representative: Klunker IP Patentanwälte PartG mbB
(86) International application number: PCT/CN2017/102754
(87) International publication number: WO 2018/054332

(56) References cited:
- CN-A- 101 640 286
- CN-A- 105 449 261
- CN-U- 205 508 963
- CN-U- 205 508 965
- CN-U- 205 564 899
- CN-U- 205 564 899
- CN-U- 206 040 883
- JP-A- 2002 008 709
- JP-B2- 4 211 623

## Description

### FIELD OF THE INVENTION

The present application relates to the field of secondary batteries, in particular, to a wound type cell.

### BACKGROUND OF THE INVENTION

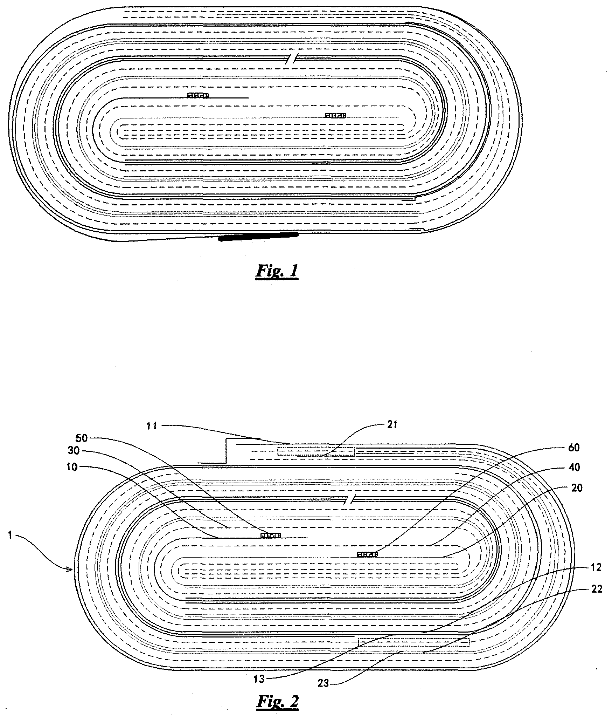

At present, polymer lithium-ion batteries are constantly pursuing high energy density, and the resulting safety problems are also a huge challenge. Many high-energy-density cells face the risk of being difficult to pass certain safety tests, such as needle and impact safety tests. The commonly used method for improving the needle impact is utilizing an outer vest region formed by the double-sided uncoated cathode-anode current collector, and currently this method can only form a vest region on one side of the cell, as shown in Fig. 1. Therefore, when the region where the vest is not formed is subjected to an external force, it is easy to cause a safety problem, and at the same time, a large energy density loss is caused while wasting the material.

JP 2002-008709 A relates to a wound cell having a large capacity density without breaking the electrodes. This wound cell is formed by winding a layered structure of a positive electrode and a negative electrode provided with the electrode active materials formed on a strip collector through a separator interposed between them. In this wound cell, the positive electrode has a one side coated with the electrode active material by one turn of the core, and the surface of the core, which is not coated with the positive electrode active material, is arranged facing to the inside of the wound body.

CN 205 564 899 U discloses a wound battery cell, which includes a positive electrode and a negative electrode each provided with electrode active materials formed on a foil type current collector, wherein a separator is interposed therebetween. In this wound cell, in all portions of the positive electrode, the positive electrode is coated with active material on both sides of the current collector, whereas the negative electrode has a portion on the outermost layer, where there is only one active material layer provided on the current collector.

In view of this, the present application is specifically filed.

### SUMMARY OF THE INVENTION

The purpose of the present invention is to provide a wound type cell as defined in the appended claims.

The present invention relates to a wound type cell, comprising a flat cell formed by winding from starting ends of a first separator, a first electrode plate connected with a first electrode tab, a second separator, and a second electrode plate connected with a second electrode tab; the first electrode plate comprising a first current collector and a first active substance coated on opposite surfaces of the first current collector, the second electrode plate comprising a second current collector and a second active substance coated on opposite surfaces of the second current collector, an outermost circumference of the second electrode plate comprises a second single-side coated region, and a surface of the second single-side coated region facing a center of the wound type cell is a second empty current collector region without coating with the second active substance; a portion of the first electrode plate opposite to the second empty current collector region comprises a first single-side coated region, and a surface of the first single-side coated region facing away from the center of the wound type cell is a first empty current collector region without coating with the first active substance;
a finishing end of the first electrode plate comprises a first empty foil region, and a portion of the second electrode plate opposite to the first empty foil region comprises a second empty foil region;
a starting end of the first empty foil region and a starting end of the second single-side coated region are located on opposite sides of the flat cell along a thickness direction of the flat cell.

Preferably, the second single-side coated region coincides with the first electrode tab and/or the second electrode tab in a projection in the thickness direction of the flat cell.

Preferably, the first empty foil region coincides with the first electrode tab and/or the second electrode tab in a projection in the thickness direction of the flat cell.

Preferably, a length of the first empty foil region is greater than a length of the second empty foil region.

Preferably, a length of the first empty foil region is less than or equal to a length of the first single-side coated region, and/or a length of the second empty foil region is less than or equal to a length of the second single-side coated region.

Preferably, a length of the first separator and/or the second separator is greater than a length of the first empty foil region.

Preferably, a distance from a starting end of the first separator to the first electrode tab is a first separator head, and a distance from a starting end of the second separator to the first electrode tab is a second separator head;
the first separator head and the second separator head are disposed in parallel along a width direction of the flat cell, or the first separator head is folded back inside the flat cell to form an separator folding section, or the first separator head and the second separator head are folded back inside the flat cell to form an separator folding section; the separator folding sections do not coincide with the first electrode tab and the second electrode tab in a projection in the thickness direction of the flat cell.

Preferably, a distance from a starting end of the second electrode plate to the second electrode tab is a second electrode plate head, and the second electrode plate head is folded back inside the flat cell to form a second electrode plate folding section; and/or a distance from a starting end of the first electrode plate to the first electrode tab is a first electrode plate head, and the first electrode plate head is folded back inside the flat cell to form a first electrode plate folding section; the first electrode plate folding section and/or the second electrode plate folding section does not coincide with the first electrode tab and the second electrode tab in a projection in the thickness direction of the flat cell.

Preferably, a starting end of the first separator is connected to a starting end of the second separator.

Preferably, the first electrode plate is a positive electrode plate, and the second electrode plate is a negative electrode plate; or the first electrode plate is a negative electrode plate, and the second electrode plate is a positive electrode plate.

Preferably, when the first electrode tab and the second electrode tab are both located at a head of the battery electrode plate, a distance of the first electrode tab from a bending point of the first electrode plate is greater than a distance of the second electrode tab from a bending point of the second electrode plate.

Preferably, a starting end of the first empty foil region and a finishing end of the first empty foil region are located on the same side of the flat cell along a thickness direction of the flat cell, or a starting end of the first empty foil region and a finishing end of the first empty foil region are located on two opposite sides of the flat cell along a thickness direction of the flat cell.

Preferably, a center line of the flat cell in a width direction is an cell mid-line, the first electrode tab and the second electrode tab are respectively located on both sides of the cell mid-line L, or the first electrode tab and the second electrode tab are located on the same side of the cell mid-line.

Preferably, the wound type cell is a multi-tab structure.

Preferably, the winding direction of the cell is counterclockwise or clockwise.

The technical solution of the present application has at least the following beneficial effects:
By improving the design of the electrode plate and the winding structure and adopting a technical solution in which a single side of the anode and cathode is finished for forming a vest via single-side coated empty cathode and anode current collectors in the thickness direction of the cell while forming a vest via double-sided coated empty cathode and anode current collectors in the width direction of the cell, the present application forms a vest on both planes of the flat cell, thereby improving the safety of the cell.

At the same time, since the present application performs finishing with a single-side coated electrode plate, the thickness of the cell may be further reduced, thereby increasing the energy density of the battery.

Moreover, since the present application forms vests on both planes of the flat cell, the thickness of the winding portions on both sides of the cell is balanced, so that the flatness of the cell is better, and the cell deformation may be improved.

### BRIEF DESCRIPTION OF THE DRAWINGS

Fig. 1 is a structural schematic view showing a conventional secondary cell;
Fig. 2 is a structural schematic view of a wound type cell according to a specific embodiment of the present application;
Fig. 3 is a structural schematic view of a wound type cell according to a specific embodiment of the present application;
Fig. 4 is a structural schematic view of a wound type cell according to a specific embodiment of the present application;
Fig. 5 is a structural schematic view of a wound type cell according to a specific embodiment of the present application;
Fig. 6 is a structural schematic view of a wound type cell according to a specific embodiment of the present application;
Fig. 7 is a structural schematic view of a wound type cell according to a specific embodiment of the present application;
Fig. 8 is a structural schematic view of a wound type cell according to a specific embodiment of the present application;
Fig. 9 is a structural schematic view of a wound type cell according to a specific embodiment of the present application;
Fig. 10 is a structural schematic view of a wound type cell according to a specific embodiment of the present application;
Fig. 11 is a structural schematic view of a wound type cell according to a specific embodiment of the present application;
Fig. 12 is a structural schematic view of a wound type cell according to a specific embodiment of the present application;
wherein:
1-flat cell;
10- first electrode plate;
1 1-first empty foil region;
12- first single-side coated region;
13-first empty current collector region;
20-second electrode plate;
21-second empty foil region;
22-second single-side coated region;
23-second empty current collector region;
24-second electrode plate folding section;
30-first separator;
301-first separator folding section;
40-second separator;
401-second separator folding section;
50-first electrode tab;
60-second electrode tab;
L-cell mid-line.

### DETAILED DESCRIPTION OF THE PREFERRED EMBODIMENTS

The following further describes the present application in combination with specific embodiments. It should be understood that these embodiments are only used to illustrate the present application, but not for the limitation of the scope of the present application. The wordings of "left" and "right" described herein are all referred to in the drawing state of the secondary cell in the drawings. It should be noted that the wordings of "starting end" and "finishing end" herein refer to an end when the winding of the cell begins and an end when the winding of the cell completes, respectively.

The present application relates to a wound type cell, comprising a flat cell 1 formed by winding from starting ends of a first separator 30, a first electrode plate 10 connected with a first electrode tab 50, a second separator 40 and a second electrode plate 20 connected with a second electrode tab 60, the first electrode plate 10 including a first current collector and a first active substance coated on opposite surfaces of the first current collector, the second electrode plate 20 including a second current collector and a second active substance coated on opposite surfaces of the second current collector;

In an embodiment of the present application, an outermost circumference of the second electrode plate 20 comprises a second single-side coated region 22, and a surface of the second single-side coated region 22 facing a center of the wound type cell is a second empty current collector region 23 without coating with the second active substance; a portion of the first electrode plate 10 opposite to the second empty current collector region 23 comprises a first single-side coated region 12, and a surface of the first single-side coated region 12 facing away from the center of the wound type cell is a first empty current collector region 13 without coating with the first active substance; that is, in the present application, the tail portions of the first electrode plate 10 and the second electrode plate 20 are each provided with a single-side coated region to form opposite vest regions on the empty current collector side in the single-side coated region. The vest region forms a protection on the cell in the face of abuse such as needle penetrating or impact, and improves the safety performance of the cell.

In an embodiment of the present application, a finishing end of the first electrode plate 10 comprises a first empty foil region 11, and a portion of the second electrode plate 20 opposite to the first empty foil region 11 comprises a second empty foil region 21; a vest region opposite to the empty current collector is formed between the first empty foil region 11 and the second empty foil region 21, and the empty foil region is a double-sided uncoated region. Also, the vest region may improve the safety performance of the battery.

In an embodiment of the present application, a length of the first empty foil region 11 is less than or equal to a length of the first single-side coated region 12, and/or a length of the second empty foil region 21 is less than or equal to a length ofthe second single-side coated region 22.

Further, a starting end of the first empty foil region 11 and a starting end of the second single-side coated region are located on opposite sides of the flat cell 1 along a thickness direction of the flat cell 1, so that a vest region is formed on opposite sides of the flat cell 1. Thus, no matter which side of the battery is abused by needle penetrating or impact, the vest region on both sides may protect the battery, thereby greatly improving the safety performance of the battery. In addition, compared to a vest in which one electrode plate is a single-side coated region and the other electrode plate is an empty foil region, in the present application, the energy density of the cell may also be improved by forming a vest region on one side with single-side coated regions of two electrode plates.

In an embodiment of the present application, when the first electrode tab 50 and the second electrode tab 60 are both located at a head of the battery electrode plate, as shown in Fig. 2, a distance of the first electrode tab 50 from a bending point of the first electrode plate 10 is greater than a distance of the second electrode tab 60 from a bending point of the second electrode plate 20. That is, when the battery is wound counterclockwise, the first electrode tab 50 is located on a left side of the second electrode tab 60, and the second single-side coated region 22 coincides with the second electrode tab 60 and the first empty foil region 11 coincides with the first electrode tab 50 in a projection in the thickness direction of the flat cell 1. In the present embodiment, the two vest regions (shown in dashed lines) each avoid a thickest position of one of the electrode tabs, so that the thickness of the cell may be further reduced to increase the energy density of the cell. And, in the cell, the symmetry of the cell is good, the flatness of the cell is better, and the deformation of the cell may be improved.

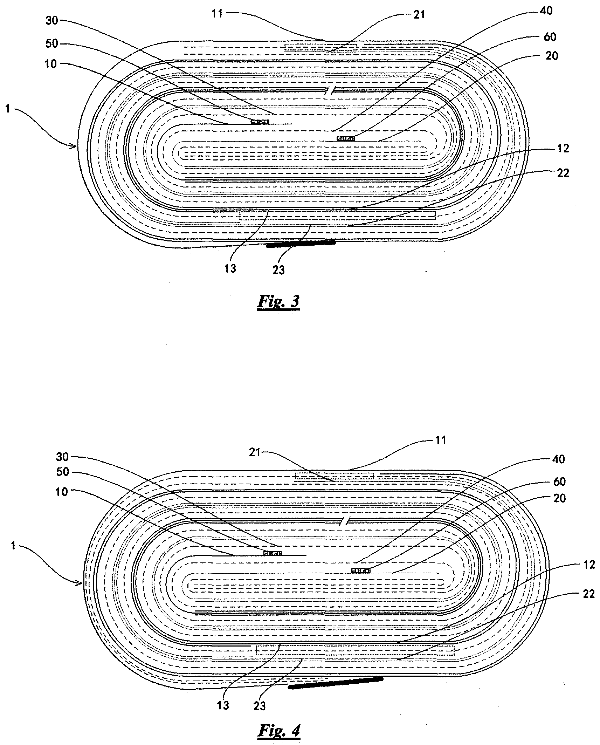

In an embodiment of the present application, as shown in Fig. 3, the first electrode tab 50 is also located on the left side of the second electrode tab 60, and the second single-side coated region 22 coincides with the first electrode tab 50 and the second electrode tab 60, and the first empty foil region 11 coincides with the first electrode tab 50 and the second electrode tab 60, in the projection in the thickness direction of the flat cell 1 . In the present embodiment, compared with Fig. 2, the area of the vest region is increased and the safety performance of the cell is further improved. Since each of the two vest regions (shown in dashed lines) avoid the thickest position of all the electrode tabs, so that the thickness of the cell may be further reduced to further increase the energy density of the cell. And, in the cell, the symmetry of the cell is good, and the deformation of the cell may also be improved.

In an embodiment of the present application, a length of the first empty foil region 11 is greater than a length of the second empty foil region 21. A tail end of the first empty foil region 11 is fixed to the first electrode plate 10 surrounding the outermost circumference of the cell by a tail glue, then the winding of the cell is completed.

In an embodiment of the present application, as shown in Fig. 2, a starting end of the first empty foil region 11 and a finishing end of the first empty foil region 11 are located on the same side of the flat cell 1 along the thickness direction of the flat cell 1. This arrangement further reduces the thickness of the cell and saves raw materials.

In an embodiment of the present application, as shown in Fig. 3, a starting end of the first empty foil region 11 and a finishing end of the first empty foil region 11 are located on two opposite sides of the flat cell 1 along the thickness direction of the flat cell 1. This arrangement enable the first empty foil region 11 rewinding by a half circle of the cell, thereby further improving the safety performance of the battery and facilitating the preparation of the cell.

In an embodiment of the present application, as shown in Fig. 4, the lengths of the first separator 30 and the second separator 40 are greater than a length of the first empty foil region 11, so that the friction between the cell and the package aluminum foil may be increased, the impact force of the cell body during the falling process may be reduced, and the fall resistance of the cell may be improved.

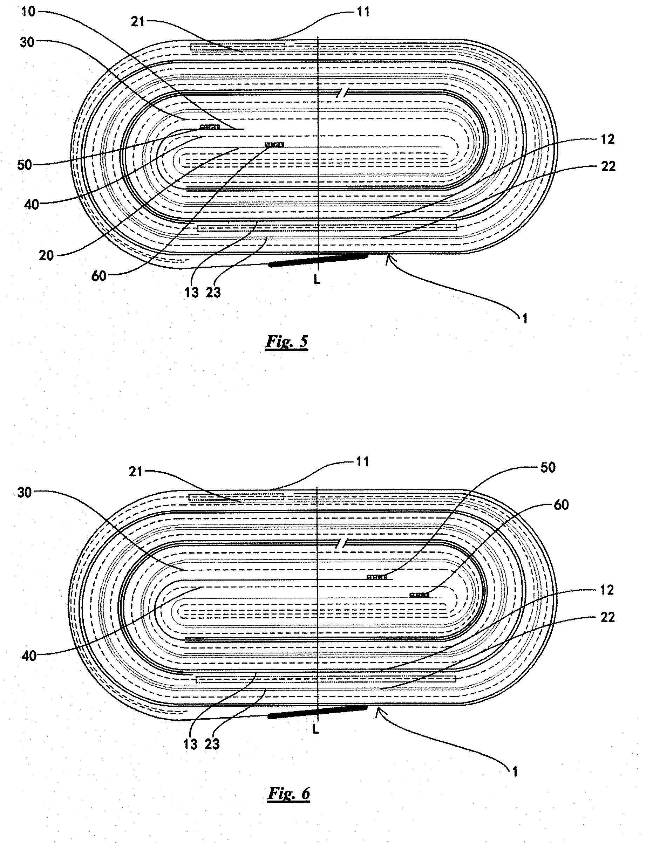

In an embodiment of the present application, a center line of the flat cell 1 in a width direction is the cell mid-line L. The first electrode tab 50 and the second electrode tab 60 are respectively located on both sides of the cell mid-line L, as shown in Figs. 2 to 4. The first electrode tab 50 and the second electrode tab 60 may also be located on the same side of the cell mid-line L, as shown in Figs. 5 and 6.

In an embodiment of the present application, as shown in Figs. 2 to 6, the separator is disposed in a conventional manner, and the first separator 30 and the second separator 40 are wound by one cycle inside the cell in the width direction of the flat cell 1 to form four layers of separators.

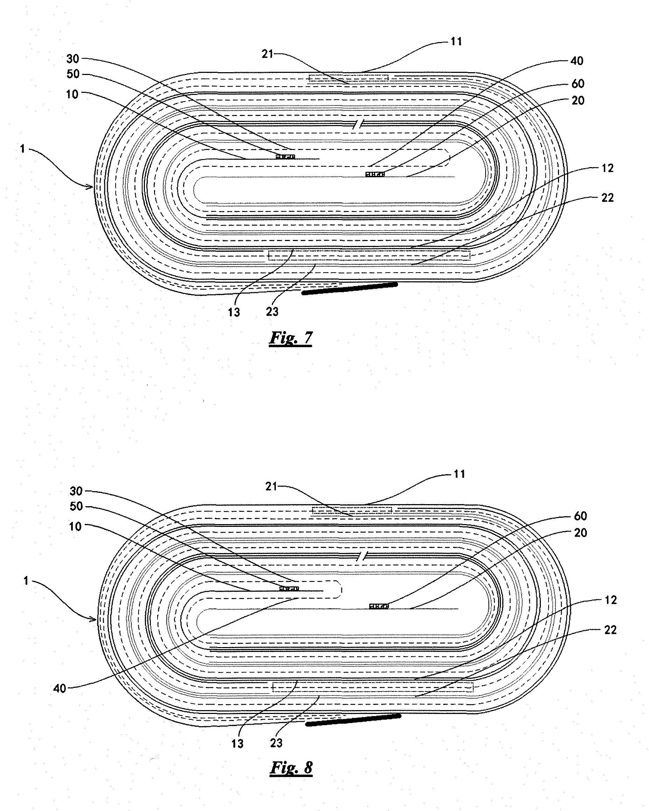

In an embodiment of the present application, the thickness of the cell may be further reduced by other means, for example, a distance from a starting end of the first separator 30 to the first electrode tab 50 is a first separator 30 head, and a distance from a starting end of the second separator 40 to the first electrode tab 50 is a second separator 40 head; the first separator 30 head and the second separator 40 head are disposed in parallel in a length direction of the flat cell 1. When the first separator 30 head and the second separator 40 head are disposed in parallel in the length direction of the flat cell 1, the starting end of the first separator 30 and the starting end of the second separator 40 may also be connected, that is, wound by a whole piece of separator, as shown in Figs. 7 to 9. Winding by a whole piece of separator may further simplify the winding method and simplify the cell preparation process.

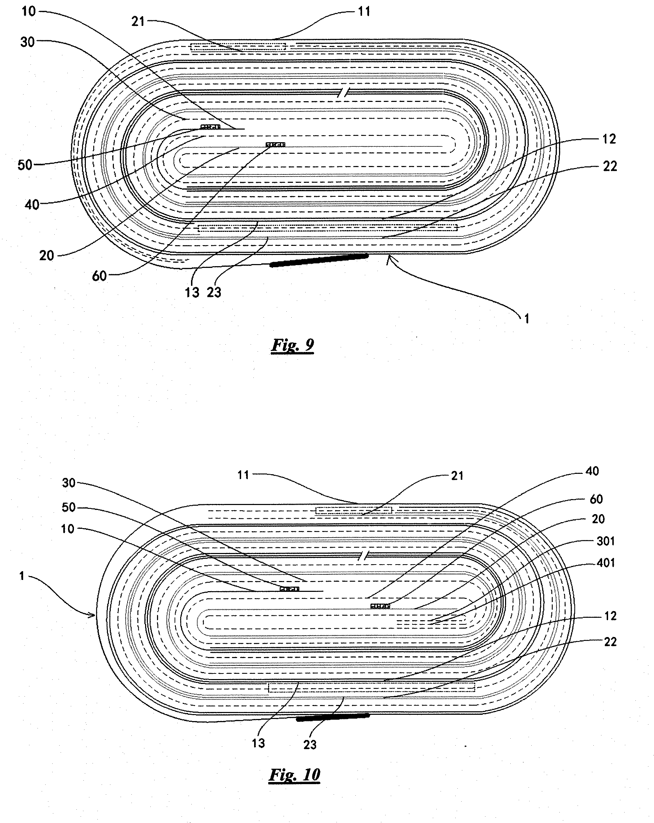

In an embodiment of the present application, the first separator 30 head may be folded back inside the flat cell 1 to form a separator folding section; the first separator 30 head and the second separator 40 head may also be folded back simultaneously inside the flat cell 1 to form a first separator folding section 301 and a second separator folding section 401, as shown in Fig. 10, and the first separator folding section 301 and the second separator folding section 401 do not coincide with the first electrode tab 50 and the second electrode tab 60 in a projection in the thickness direction of the flat cell 1. Thereby, the effect of reducing the thickness of the cell may be achieved to further increase the energy density.

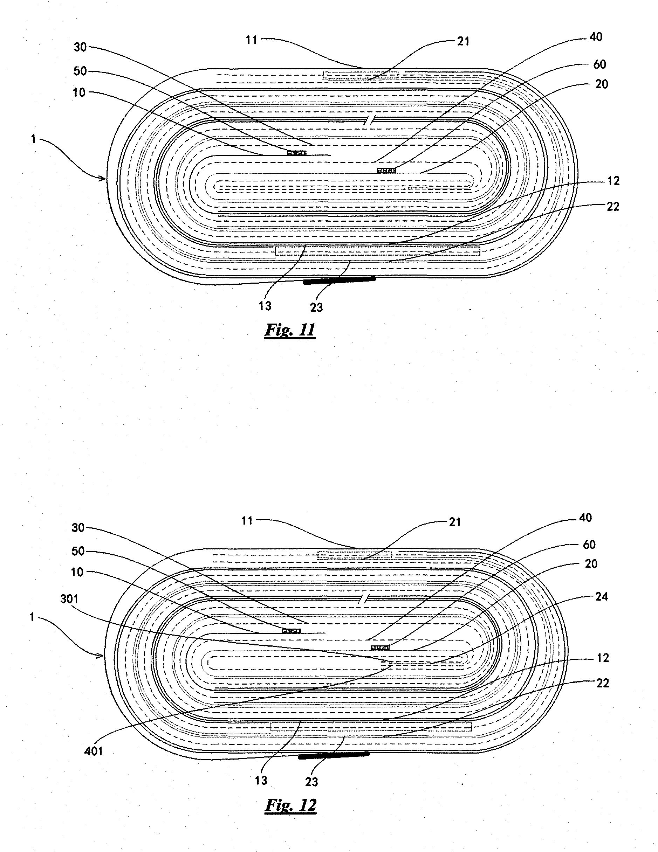

In order to facilitate the winding of the battery, a head of the electrode plate may also be folded, and a distance from a starting end of the second electrode plate 20 to the second electrode tab 60 is a second electrode plate 20 head, and the second electrode plate 20 head is folded back inside the flat cell 1 to form a second electrode plate folding section 24, as shown in Fig. 11, and the second electrode plate folding section 24 does not coincide with the first electrode tab 50 and the second electrode tab 60.

As shown in Fig. 12, the first separator 30 and the second separator 40 may also be folded together with the second electrode plate 20 head, and the formed folding section does not coincide with the first electrode tab 50 and the second electrode tab 60.

In an embodiment of the present application, the wound type cell of the present application may be a multi-tab structure, for example, an electrode tab may be soldered at the empty cathode anode current collectors of the outermost ring to increase its charge and discharge rate performance.

In an embodiment of the present application, the winding direction of the cell is counterclockwise or clockwise, depending on the cell winding device.

In an embodiment of the present application, when the first electrode plate 10 is a positive electrode plate, the second electrode plate 20 is a negative electrode plate; or when the first electrode plate 10 is a negative electrode plate, the second electrode plate 20 is a positive electrode plate.

## Claims

1. A wound type cell, comprising a flat cell (1) formed by winding from starting ends of a first separator (30), a first electrode plate (10) connected with a first electrode tab (50), a second separator (40), and a second electrode plate (20) connected with a second electrode tab (60); the first electrode plate (10) comprising a first current collector and a first active substance coated on opposite surfaces of the first current collector, the second electrode plate (20) comprising a second current collector and a second active substance coated on opposite surfaces of the second current collector; **characterized in that**,
an outermost circumference of the second electrode plate (20) comprises a second single-side coated region (22), and a surface of the second single-side coated region (22) facing a center of the wound type cell is a second empty current collector region (23) without coating with the second active substance; a portion of the first electrode plate (10) opposite to the second empty current collector region (23) comprises a first single-side coated region (12), and a surface of the first single-side coated region (12) facing away from the center of the wound type cell is a first empty current collector region (13) without coating with the first active substance;
a finishing end of the first electrode plate (10) comprises a first empty foil region (11), and a portion of the second electrode plate (20) opposite to the first empty foil region (11) comprises a second empty foil region (21);
a starting end of the first empty foil region (11) and a starting end of the second single-side coated region (22) are located on opposite sides of the flat cell (1) along a thickness direction of the flat cell (1).

2. The wound type cell according to claim 1, **characterized in that** the second single-side coated region (22) coincides with the first electrode tab (50) and/or the second electrode tab (60) in a projection in the thickness direction of the flat cell (1).

3. The wound type cell according to claim 1 or 2, **characterized in that** the first empty foil region (11) coincides with the first electrode tab (50) and/or the second electrode tab (60) in a projection in the thickness direction of the flat cell (1).

4. The wound type cell according to claim 1, **characterized in that** a length of the first empty foil region (11) is greater than a length of the second empty foil region (21).

5. The wound type cell according to claim 1, **characterized in that** a length of the first empty foil region (11) is less than or equal to a length of the first single-side coated region (12), and/or a length of the second empty foil region (21) is less than or equal to a length of the second single-side coated region (22).

6. The wound type cell according to claim 1, **characterized in that** a length of the first separator (30) and/or the second separator (40) is greater than a length of the first empty foil region (11).

7. The wound type cell according to claim 1, **characterized in that** a distance from a starting end of the first separator (30) to the first electrode tab (50) is a first separator head, and a distance from a starting end of the second separator (60) to the first electrode tab (50) is a second separator head;
the first separator head and the second separator head are disposed in parallel along a width direction of the flat cell (1), or the first separator head is folded back inside the flat cell (1) to form an separator folding section (301), or the first separator head and the second separator head are folded back inside the flat cell (1) to form an separator folding section (301); the separator folding sections (301) do not coincide with the first electrode tab (50) and the second electrode tab (60) in a projection in the thickness direction of the flat cell (1).

8. The wound type cell according to claim 1, **characterized in that** a distance from a starting end of the second electrode plate (20) to the second electrode tab (60) is a second electrode plate head, and the second electrode plate head is folded back inside the flat cell (1) to form a second electrode plate folding section (401); and/or a distance from a starting end of the first electrode plate (10) to the first electrode tab (50) is a first electrode plate head, and the first electrode plate head is folded back inside the flat cell (1) to form a first electrode plate folding section (301); the first electrode plate folding section (301) and/or the second electrode plate folding section (401) does not coincide with the first electrode tab (50) and the second electrode tab (60) in a projection in the thickness direction of the flat cell (1).

9. The wound type cell according to claim 1, **characterized in that** a starting end of the first separator (30) is connected to a starting end of the second separator (40).

10. The wound type cell according to any one of claims 1 to 9, **characterized in that** the first electrode plate (10) is a positive electrode plate, and the second electrode plate (20) is a negative electrode plate; or the first electrode plate (10) is a negative electrode plate, and the second electrode plate (20) is a positive electrode plate.

11. The wound type cell according to claim 1, **characterized in that** when the first electrode tab (50) and the second electrode tab (60) are both located at a head of the battery electrode plate, a distance of the first electrode tab (50) from a bending point of the first electrode plate (10) is greater than a distance of the second electrode tab (60) from a bending point of the second electrode plate (10).

12. The wound type cell according to claim 1, **characterized in that** a starting end of the first empty foil region (11) and a finishing end of the first empty foil region (11) are located on the same side of the flat cell (1) along a thickness direction of the flat cell (1), or a starting end of the first empty foil region (11) and a finishing end of the first empty foil region (11) are located on two opposite sides of the flat cell (1) along a thickness direction of the flat cell (1).

13. The wound type cell according to claim 1, **characterized in that** a center line of the flat cell (1) in a width direction is an cell mid-line (L), the first electrode tab (50) and the second electrode tab (60) are respectively located on both sides of the cell mid-line (L), or the first electrode tab (50) and the second electrode tab (60) are located on the same side of the cell mid-line (L).

14. The wound type cell according to claim 1, **characterized in that** the wound type cell is a multi-tab structure.

15. The wound type cell according to claim 1, **characterized in that** the winding direction of the cell is counterclockwise or clockwise.

## Patentansprüche

1. Gewickelte Zelle, umfassend eine flache Zelle (1), die durch Wickeln von Anfangsenden eines ersten Separators (30), einer ersten Elektrodenplatte (10), die mit einer ersten Elektrodenlasche (50) verbunden ist, eines zweiten Separators (40) und einer zweiten Elektrodenplatte (20), die mit einer zweiten Elektrodenlasche (60) verbunden ist, gebildet wird; wobei die erste Elektrodenplatte (10) einen ersten Stromkollektor und eine erste aktive Substanz umfasst, die auf gegenüberliegende Oberflächen des ersten Stromkollektors aufgebracht ist, und die zweite Elektrodenplatte (20) einen zweiten Stromkollektor und eine zweite aktive Substanz umfasst, die auf gegenüberliegende Oberflächen des zweiten Stromkollektors aufgebracht ist; **dadurch gekennzeichnet, dass**,
ein äußerster Umfang der zweiten Elektrodenplatte (20) einen zweiten einseitig beschichteten Bereich (22) umfasst, und eine Oberfläche des zweiten einseitig beschichteten Bereichs (22), die einem Zentrum der gewickelten Zelle zugewandt ist, ein zweiter leerer Stromkollektorbereich (23) ohne Beschichtung mit der zweiten aktiven Substanz ist; ein Abschnitt der ersten Elektrodenplatte (10), der dem zweiten leeren Stromkollektorbereich (23) gegenüberliegt, einen ersten einseitig beschichteten Bereich (12) umfasst, und eine Oberfläche des ersten einseitig beschichteten Bereichs (12), die vom Zentrum der gewickelten Zelle abgewandt ist, ein erster leerer Stromkollektorbereich (13) ohne Beschichtung mit der ersten aktiven Substanz ist;
ein Abschlussende der ersten Elektrodenplatte (10) einen ersten leeren Folienbereich (11) umfasst, und ein Abschnitt der zweiten Elektrodenplatte (20) gegenüber dem ersten leeren Folienbereich (11) einen zweiten leeren Folienbereich (21) umfasst;
ein Anfangsende des ersten leeren Folienbereichs (11) und ein Anfangsende des zweiten einseitig beschichteten Bereichs (22) auf gegenüberliegenden Seiten der flachen Zelle (1) entlang einer Dickenrichtung der Flachzelle (1) angeordnet sind.

2. Gewickelte Zelle nach Anspruch 1, **dadurch gekennzeichnet, dass** der zweite einseitig beschichtete Bereich (22) mit der ersten Elektrodenlasche (50) und/oder der zweiten Elektrodenlasche (60) in einer Projektion in Dickenrichtung der flachen Zelle (1) zusammenfällt.

3. Gewickelte Zelle nach Anspruch 1 oder 2, **dadurch gekennzeichnet, dass** der erste leere Folienbereich (11) mit der ersten Elektrodenlasche (50) und/oder der zweiten Elektrodenlasche (60) in einer Projektion in Dickenrichtung der flachen Zelle (1) zusammenfällt.

4. Gewickelte Zelle nach Anspruch 1, **dadurch gekennzeichnet, dass** eine Länge des ersten leeren Folienbereichs (11) größer ist als eine Länge des zweiten leeren Folienbereichs (21).

5. Gewickelte Zelle nach Anspruch 1, **dadurch gekennzeichnet, dass** eine Länge des ersten leeren Folienbereichs (11) kleiner oder gleich einer Länge des ersten einseitig beschichteten Bereichs (12) ist, und/oder dass eine Länge des zweiten leeren Folienbereichs (21) kleiner oder gleich einer Länge des zweiten einseitig beschichteten Bereichs (22) ist.

6. Gewickelte Zelle nach Anspruch 1, **dadurch gekennzeichnet, dass** eine Länge des ersten Separators (30) und/oder des zweiten Separators (40) größer ist als eine Länge des ersten leeren Folienbereichs (11).

7. Gewickelte Zelle nach Anspruch 1, **dadurch gekennzeichnet, dass** ein Abstand von einem Anfangsende des ersten Separators (30) zu der ersten Elektrodenlasche (50) ein erster Separatorkopf ist und ein Abstand von einem Anfangsende des zweiten Separators (60) zu der ersten Elektrodenlasche (50) ein zweiter Separatorkopf ist;
der erste Separatorkopf und der zweite Separatorkopf parallel entlang einer Breitenrichtung der flachen Zelle (1) angeordnet sind, oder der erste Separatorkopf innerhalb der flachen Zelle (1) zurückgefaltet ist, um einen Separatorfaltabschnitt (301) zu bilden, oder der erste Separatorkopf und der zweite Separatorkopf innerhalb der flachen Zelle (1) zurückgefaltet sind, um einen Separatorfaltabschnitt (301) zu bilden; die Separator-Faltabschnitte (301) nicht mit der ersten Elektrodenlasche (50) und der zweiten Elektrodenlasche (60) in einer Projektion in der Dickenrichtung der flachen Zelle (1) übereinstimmen.

8. Gewickelte Zelle nach Anspruch 1, **dadurch gekennzeichnet, dass** ein Abstand von einem Anfangsende der zweiten Elektrodenplatte (20) zu der zweiten Elektrodenlasche (60) ein zweiter Elektrodenplattenkopf ist, und der zweite Elektrodenplattenkopf innerhalb der flachen Zelle (1) zurückgefaltet ist, um einen zweiten Elektrodenplattenfaltabschnitt (401) zu bilden; und/oder ein Abstand von einem Anfangsende der ersten Elektrodenplatte (10) zu der ersten Elektrodenlasche (50) ein erster Elektrodenplattenkopf ist, und der erste Elektrodenplattenkopf innerhalb der flachen Zelle (1) zurückgefaltet ist, um einen ersten Elektrodenplattenfaltabschnitt (301) zu bilden; wobei der erste Elektrodenplattenfaltabschnitt (301) und/oder der zweite Elektrodenplattenfaltabschnitt (401) nicht mit der ersten Elektrodenlasche (50) und der zweiten Elektrodenlasche (60) in einer Projektion in der Dickenrichtung der flachen Zelle (1) zusammenfällt.

9. Gewickelte Zelle nach Anspruch 1, **dadurch gekennzeichnet, dass** ein Anfangsende des ersten Separators (30) mit einem Anfangsende des zweiten Separators (40) verbunden ist.

10. Gewickelte Zelle nach einem der Ansprüche 1 bis 9, **dadurch gekennzeichnet, dass** die erste Elektrodenplatte (10) eine positive Elektrodenplatte und die zweite Elektrodenplatte (20) eine negative Elektrodenplatte ist; oder dass die erste Elektrodenplatte (10) eine negative Elektrodenplatte und die zweite Elektrodenplatte (20) eine positive Elektrodenplatte ist.

11. Gewickelte Zelle nach Anspruch 1, **dadurch gekennzeichnet, dass**, wenn die erste Elektrodenlasche (50) und die zweite Elektrodenlasche (60) beide an einem Kopf der Batterieelektrodenplatte angeordnet sind, ein Abstand der ersten Elektrodenlasche (50) von einem Biegepunkt der ersten Elektrodenplatte (10) größer ist als ein Abstand der zweiten Elektrodenlasche (60) von einem Biegepunkt der zweiten Elektrodenplatte (10).

12. Gewickelte Zelle nach Anspruch 1, **dadurch gekennzeichnet, dass** ein Anfangsende des ersten leeren Folienbereichs (11) und ein Abschlussende des ersten leeren Folienbereichs (11) auf derselben Seite der flachen Zelle (1) entlang einer Dickenrichtung der flachen Zelle (1) angeordnet sind, oder ein Anfangsende des ersten leeren Folienbereichs (11) und ein Abschlussende des ersten leeren Folienbereichs (11) auf zwei gegenüberliegenden Seiten der flachen Zelle (1) entlang einer Dickenrichtung der flachen Zelle (1) angeordnet sind.

13. Gewickelte Zelle nach Anspruch 1, **dadurch gekennzeichnet, dass** eine Mittellinie der flachen Zelle (1) in einer Breitenrichtung eine Zellmittellinie (L) ist, die erste Elektrodenlasche (50) und die zweite Elektrodenlasche (60) jeweils auf beiden Seiten der Zellmittellinie (L) angeordnet sind, oder die erste Elektrodenlasche (50) und die zweite Elektrodenlasche (60) auf derselben Seite der Zellmittellinie (L) angeordnet sind.

14. Gewickelte Zelle nach Anspruch 1, **dadurch gekennzeichnet, dass** die gewickelte eine Multi-Laschen-Struktur ist.

15. Gewickelte Zelle nach Anspruch 1, **dadurch gekennzeichnet, dass** die Wickelrichtung der Zelle gegen den Uhrzeigersinn oder im Uhrzeigersinn ist.

## Revendications

1. Cellule de type enroulé, comprenant une cellule plate (1) formée en enroulant, à partir d'extrémités de départ d'un premier séparateur (30), une première électrode en plaque (10) connectée à une première languette d'électrode (50), un second séparateur (40), et une seconde électrode en plaque (20) connectée à une seconde languette d'électrode (60), la première électrode en plaque (10) comprenant un premier collecteur de courant et une première substance active revêtue sur des surfaces opposées du premier collecteur de courant, la seconde électrode en plaque (20) comprenant un second collecteur de courant et une seconde substance active revêtue sur des surfaces opposées du second collecteur de courant, **caractérisée en ce que**
une circonférence la plus à l'extérieur de la seconde électrode en plaque (20) comprend une seconde région revêtue sur un seul côté (22), et une surface de la seconde région revêtue sur un seul côté (22) faisant face à un centre de la cellule de type enroulé est une seconde région de collecteur de courant vide (23) sans revêtement avec la seconde substance active ; une portion de la première électrode en plaque (10) face à la seconde région de collecteur de courant vide (23) comprend une première région revêtue sur un seul côté (12), et une surface de la première région revêtue sur un seul côté (12), orientée à l'opposé du centre de la cellule de type enroulé est une première région de collecteur de courant vide (13) sans revêtement avec la première substance active ;
une extrémité de finition de la première électrode en plaque (10) comprend une première région de feuille vide (11), et une portion de la seconde électrode en plaque (20), face à la première région de feuille vide (11), comprend une seconde région de feuille vide (21), et
une extrémité de départ de la première région de feuille vide (11) et une extrémité de départ de la seconde région revêtue sur un seul côté (22) se situent sur des côtés opposés de la cellule plate (1) le long d'une direction d'épaisseur de la cellule plate (1).

2. Cellule de type enroulé selon la revendication 1, **caractérisée en ce que** la seconde région revêtue sur un seul côté (22) coïncide avec la première languette d'électrode (50) et/ou la seconde languette d'électrode (60) dans une projection dans la direction d'épaisseur de la cellule plate (1).

3. Cellule de type enroulé selon la revendication 1ou 2, **caractérisée en ce que** la première région de feuille vide (11) coïncide avec la première languette d'électrode (50) et/ou la seconde languette d'électrode (60) dans une projection dans la direction d'épaisseur de la cellule plate (1).

4. Cellule de type enroulé selon la revendication 1, **caractérisée en ce qu'**une longueur de la première région de feuille vide (11) est supérieure à une longueur de la seconde région de feuille vide (21).

5. Cellule de type enroulé selon la revendication 1, **caractérisée en ce qu'**une longueur de la première région de feuille vide (21) est inférieure ou égale à une longueur de la première région revêtue d'un seul côté (12), et une longueur de la seconde région de feuille vide (21) est inférieure ou égale à une longueur de la seconde région revêtue sur un seul côté (22).

6. Cellule de type enroulé selon la revendication 1, **caractérisée en ce qu'**une longueur du premier séparateur (30) et/ou du second séparateur (40) est supérieure à une longueur de la première région de feuille vide (11).

7. Cellule de type enroulé selon la revendication 1, **caractérisée en ce qu'**une distance d'une extrémité de départ du premier séparateur (30) jusqu'à la première languette d'électrode (50) est une première tête de séparateur, et une distance d'une extrémité de départ du second séparateur (60) jusqu'à la première languette d'électrode (50) est une seconde tête de séparateur, et
la première tête de séparateur et la seconde tête de séparateur sont disposées en parallèle le long d'une direction de largeur de la cellule plate (1), ou la première tête de séparateur est repliée dans la cellule plate (1) afin de former une section de pliage de séparateur (301), ou la première tête de séparateur et la seconde tête de séparateur sont repliées dans la cellule plate (1) afin de former une section de pliage de séparateur (301) ; les sections de pliage de séparateur (301) ne coïncident pas avec la première languette d'électrode (50) et la seconde languette d'électrode (60) dans une projection dans la direction d'épaisseur de la cellule plate (1).

8. Cellule de type enroulé selon la revendication 1, **caractérisée en ce qu'**une distance d'une extrémité de départ de la seconde électrode en plaque (20) jusqu'à la seconde languette d'électrode (60) est une seconde tête d'électrode en plaque, et la seconde tête d'électrode en plaque est repliée dans la cellule plate (1) afin de former une seconde section de pliage d'électrode en plaque (401), et/ou une distance d'une extrémité de départ de la première électrode en plaque (10) à la première languette d'électrode (50) est une première tête d'électrode en plaque, et la première tête d'électrode en plaque est repliée dans la cellule plate (1) afin de former une première section de pliage d'électrode en plaque (301) ; la première section de pliage d'électrode en plaque (301) et/ou la seconde section de pliage d'électrode en plaque (401) ne coïncident pas avec la première languette d'électrode (50) et la seconde languette d'électrode (60) dans une projection dans la direction d'épaisseur de la cellule plate (1).

9. Cellule de type enroulé selon la revendication 1, **caractérisée en ce qu'**une extrémité de départ du premier séparateur (30) est connectée à une extrémité de départ du second séparateur (40).

10. Cellule de type enroulé selon l'une quelconque des revendications 1 à 9, **caractérisée en ce que** la première électrode en plaque (10) est une électrode en plaque positive, et la seconde électrode en plaque (20) est une électrode en plaque négative, ou la première électrode en plaque (10) est une électrode en plaque négative, et la seconde électrode en plaque (20) est une électrode en plaque positive.

11. Cellule de type enroulé selon la revendication 1, **caractérisée en ce que** lorsque la première languette d'électrode (50) et la seconde languette d'électrode (60) se situent toutes les deux sur une tête de l'électrode en plaque de batterie, une distance de la première languette d'électrode (50) à partir d'un point de flexion de la première électrode en plaque (10) est supérieure à une distance de la seconde languette d'électrode (60) à partir d'un point de flexion de la seconde électrode en plaque (10).

12. Cellule de type enroulé selon la revendication 1, **caractérisée en ce qu'**une extrémité de départ de la première région de feuille vide (11) et une extrémité de finition de la première région de feuille vide (11) se situent sur un même côté de la cellule plate (1) le long d'une direction d'épaisseur de la cellule plate (1), ou une extrémité de départ de la première région de feuille vide (11) et une extrémité de finition de la première région de feuille vide (11) se situent sur deux côtés opposés de la cellule plate (1) le long d'une direction d'épaisseur de la cellule plate (1).

13. Cellule de type enroulé selon la revendication 1, **caractérisée en ce qu'**une ligne centrale de la cellule plate (1) dans une direction de largeur est une ligne médiane de cellule (L) ; la première languette d'électrode (50) et la seconde languette d'électrode (60) sont respectivement situées sur les deux côtés de la ligne médiane de cellule (L), ou la première languette d'électrode (50) et la seconde languette d'électrode (60) sont situées sur le même côté de la ligne médiane de cellule (L).

14. Cellule de type enroulé selon la revendication 1, **caractérisée en ce que** la cellule de type enroulé est une structure à plusieurs languettes.

15. Cellule de type enroulé selon la revendication 1, **caractérisée en ce que** la direction d'enroulement de la cellule est une direction horaire ou antihoraire.
